# DEMANDE DE BREVET EUROPEEN

(11) **EP 0 829 628 A1**
(43) Date de publication de la demande: **18.03.1998**
(21) Numéro de dépôt: 97402115.6
(22) Date de dépôt: 12.09.1997
(51) Int. Cl.: F02B 61/04

(54) **Dispositif de moteur à explosion**

(30) Priorité: 13.09.1996 FR 9611187
(71) Demandeur: Peauger, Philippe, 77320 Saint-Rémy-de-la Vanne (FR)
(72) Inventeur: Peauger, Philippe, 77320 Saint-Rémy-de-la Vanne (FR)
(74) Mandataire: Dronne, Guy

(57) **Abrégé**

L'invention concerne un dispositif de moteur à explosion, notamment pour ULM. Il comprend un bloc moteur (10), un vilebrequin (16) monté dans deux paliers d'extrémité (20, 22) et présentant à chacune de ses extrémités une portion terminale rectiligne (28, 30) dépassant desdits paliers, un axe de sortie (40) monté à rotation dans au moins deux paliers (42, 44), ledit axe étant parallèle à l'axe de rotation du vilebrequin, chaque portion terminale du vilebrequin étant munie d'au moins une poulie (32, 34) d'entraînement solidaire dudit vilebrequin, chaque portion d'extrémité de l'axe étant munie d'au moins une poulie entraînée (52, 54) solidaire dudit axe, au moins une première courroie (54) de transmission montée sur une poulie d'entraînement et une poulie entraînée correspondante et au moins une deuxième courroie d'entraînement (56) montée sur l'autre poulie d'entraînement et l'autre poulie entraînée correspondante.

## Description

La présente invention a pour objet un dispositif de moteur à explosion, notamment mais non exclusivement pour ULM ou autre dispositif du même genre dans lesquels il est souhaitable de disposer d'un moyen de propulsion par moteur léger avec une plage importante de réglage de vitesse et de grande fiabilité.

On sait que, dans les moteurs à explosion classiques, qu'ils soient à deux temps ou à quatre temps et quel que soit leur nombre de cylindres, la puissance délivrée par le moteur est récupérée à l'une des extrémités du vilebrequin qui est relié aux roues dans le cas d'un véhicule automobile ou à l'hélice dans le cas d'un avion ou similaire par un ensemble d'organes mécaniques plus ou moins complexes. Ce mode de récupération de l'énergie impose, afin d'éviter des irrégularités dans le couple disponible à la sortie du vilebrequin et, afin d'éviter des phénomènes de vibration, de prévoir un vilebrequin présentant une résistance mécanique importante et donc un volume et un poids important et de monter ce vilebrequin sur des paliers d'extrémité et éventuellement intermédiaire, en prévoyant sur différentes parties du vilebrequin la présence de masselottes d'équilibrage.

Un objet de la présente invention est de fournir un dispositif de moteur à explosion qui permette de supprimer ou réduire les inconvénients mentionnés ci-dessus et qui soit particulièrement bien adapté à la propulsion de mobiles tels que des ULM.

Pour atteindre ce but, selon l'invention, le dispositif de moteur à explosion comprend :
- un bloc moteur comportant n cylindres et n bielles;
- un vilebrequin sur lequel sont montées les extrémités libres des bielles, ledit vilebrequin présentant à chacune de ses extrémités une portion terminale rectiligne dépassant des paliers;
- un axe de sortie monté à rotation dans au moins deux paliers, ledit axe étant parallèle à l'axe de rotation du vilebrequin, ledit axe présentant à chacune de ses extrémités une portion d'extrémité dépassant desdits paliers,
- chaque portion terminale étant munie d'au moins une poulie d'entraînement solidaire dudit vilebrequin;
- chaque portion d'extrémité étant munie d'au moins une poulie entraînée solidaire dudit axe,
- au moins une première courroie de transmission montée sur une poulie d'entraînement et une poulie entraînée correspondante; et
- au moins une deuxième courroie d'entraînement montée sur l'autre poulie d'entraînement et l'autre poulie entraînée correspondante.

On comprend que, grâce au fait que la puissance disponible sur le vilebrequin est récupérée aux deux extrémités de celui-ci et transmise à l'axe de sortie, on a une meilleure répartition des efforts sur le vilebrequin et les dimensions de celui-ci peuvent donc être réduites. En outre, du fait que la ou les poulies de transmission entre le vilebrequin et l'axe de sortie sont disposées au-delà des paliers du vilebrequin, la tension des courroies de transmission dans ces régions permet de partager le porte-à-faux qui existe dans les vilebrequins classiques, à chaque extrémité de celui-ci.

On comprend en outre qu'en choisissant convenablement les diamètres des poulies d'entraînement montées sur le vilebrequin et les diamètres des poulies entraînées montées sur l'axe de sortie, on peut réaliser un rapport de réduction sans qu'il soit nécessaire de prévoir un dispositif mécanique particulier de réduction de vitesse.

D'autres caractéristiques et avantages de l'invention apparaîtront mieux à la lecture de la description qui suit d'un mode de réalisation de l'invention donné à titre d'exemple non limitatif. La description se réfère aux figures annexées sur lesquelles :
- la figure 1 est une vue schématique illustrant le principe de l'invention; et
- la figure 2 est une vue plus détaillée montrant un mode préféré de réalisation de l'invention.

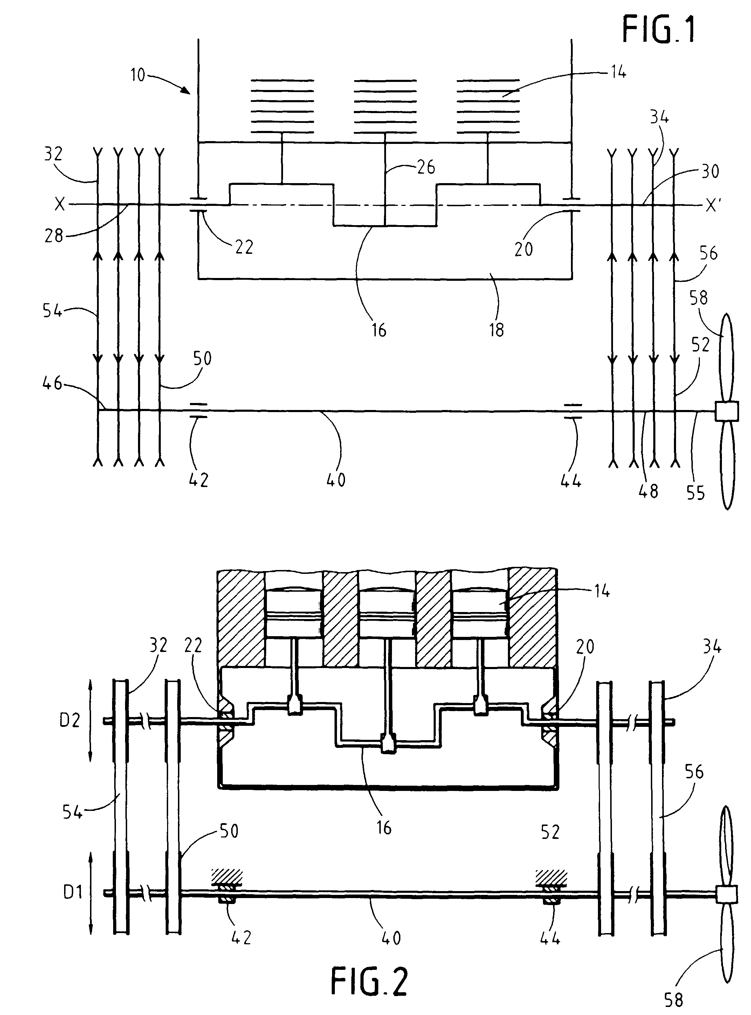

En se référant tout d'abord à la figure 1, on va décrire le principe de l'invention. Sur cette figure, on a représenté schématiquement le bloc moteur 10 avec ses pistons 14. Dans le cas particulier de la figure 1, il s'agit d'un moteur à trois cylindres. On a représenté également le vilebrequin 16 qui est monté dans le carter 18 par l'intermédiaire de deux paliers d'extrémité 22 et 20. Les bielles 26 raccordent les pistons 14 au vilebrequin 16.

Le vilebrequin 16 est prolongé à ses deux extrémités par des portions rectilignes 28 et 30 qui font saillie hors des paliers d'extrémité 20 et 22. Sur les portions d'extrémité 28 et 30, sont montées des poulies telles que 32 et 34. Ces poulies ont toutes un même diamètre et sont clavetées en rotation. Dans le cas particulier de la figure 1, chaque portion d'extrémité comporte quatre poulies.

Le dispositif de moteur comporte également un axe de sortie 40 qui est parallèle à l'axe de rotation XX' du vilebrequin 16. Cet axe 40 est monté dans des paliers 42 et 44 qui sont bien sûr fixes par rapport au bloc moteur 10. L'axe de sortie 40 comporte deux extrémités 46 et 48 qui font saillie hors des paliers 42 et 44. Sur l'extrémité 46, sont montées quatre poulies 50 solidaires en rotation de l'axe 40. Ces poulies sont en regard des poulies 32 du vilebrequin 16. A l'autre extrémité 48 de l'axe 40, sont montées également quatre poulies 52 solidaires de l'axe 40 et disposées dans des mêmes plans que les poulies 34. Des courroies de transmission telles que 54 et 56 relient respectivement les poulies 32 aux poulies 46 et les poulies 34 aux poulies 52. En d'autres termes, les poulies 32 et 34 sont des poulies d'entraînement et les poulies 50 et 52 sont des poulies entraînées. Sur l'extrémité terminale 55 de l'axe 40, on peut monter directement par exemple une hélice 58 dans le cas où le moteur est destiné à être monté sur un ULM.

Bien entendu, le nombre de poulies est déterminé en fonction de la puissance à transmettre.

Les avantages du dispositif de moteur à explosion qui vient d'être décrit apparaissent clairement. Du fait que la puissance délivrée par le moteur est prélevée aux deux extrémités du vilebrequin et non à une seule et du fait que les groupes de poulies 32 et 34 sont disposés au-delà des paliers 20 et 22, ces poulies étant reliées avec tension par les courroies 54 et 56 aux poulies 50 et 52, c'est-à-dire du fait que l'on a une distribution symétrique aux extrémités du vilebrequin 16, on obtient ainsi un partage du porte-à-faux auquel le vilebrequin est soumis. En outre, du fait que la puissance est prélevée à chaque extrémité, le vilebrequin peut avoir une résistance mécanique moins élevée et donc être allégé. Enfin, du fait de la réduction du porte-à-faux, les masselottes d'équilibrage ne sont plus nécessaires.

On comprend également que, en donnant respectivement aux poulies 32 et 34 d'une part, et, d'autre part, 50 et 52 des rapports de diamètre convenables, on peut réaliser directement la réduction de vitesse de rotation pour l'adapter à la vitesse de rotation souhaitée pour l'hélice 58, sans qu'il soit nécessaire de prévoir un réducteur mécanique.

On comprend également que le dispositif de moteur peut avoir un nombre quelconque de cylindres, deux, trois, quatre ou cinq ou même plus et qu'il peut s'agir d'un moteur à quatre temps ou d'un moteur à deux temps, comme cela se rencontre le plus souvent dans le cas des ULM.

La figure 2 correspond exactement à la figure 1 décrite précédemment. Sur cette figure, on a fait apparaître les paliers 20 et 22 qui sont de préférence des paliers réalisant l'étanchéité du carter 18; on a représenté également les diamètres D1 et D2 des poulies respectivement montées sur l'axe de sortie 40 et sur les extrémités du vilebrequin 16 qui ont un diamètre D2. Comme on l'a déjà indiqué, en choisissant convenablement les diamètres D1 et D2, on peut définir ainsi le rapport de réduction de vitesse entre la vitesse de rotation à la sortie du vilebrequin et la vitesse souhaitée pour l'entraînement de l'hélice 58; on comprend qu'ainsi, le système de réduction de vitesse est très simple et il évite ainsi d'avoir à résoudre des problèmes de lubrification d'un réducteur mécanique de vitesse.

De préférence également, les courroies de transmission 54 et 56 reliant les poulies du vilebrequin aux poulies de l'axe de sortie sont des courroies en matériau élastique standard et de préférence à section trapézoïdale. Ces courroies exercent donc effectivement des efforts de traction entre le vilebrequin et l'axe de sortie, ce qui permet de limiter, comme on l'a déjà expliqué, les effets de porte-à-faux.

## Revendications

1. Dispositif de moteur à explosion, notamment pour ULM, caractérisé en ce qu'il comprend :
- un bloc moteur (10) comportant n cylindres et n bielles (26);
- un vilebrequin (16) sur lequel sont montées les extrémités libres des bielles, ledit vilebrequin étant monté dans deux paliers d'extrémité (20, 22) et présentant à chacune de ses extrémités une portion terminale (28, 30) rectiligne dépassant desdits paliers;
- un axe de sortie (40) monté à rotation dans au moins deux paliers (42, 44), ledit axe étant parallèle à l'axe de rotation du vilebrequin, ledit axe présentant à chacune de ses extrémités une portion d'extrémité (46, 48) dépassant desdits paliers,
- chaque portion terminale étant munie d'au moins une poulie d'entraînement (32, 34) solidaire dudit vilebrequin;
- chaque portion d'extrémité étant munie d'au moins une poulie entraînée (50) solidaire dudit axe,
- au moins une première courroie (54) de transmission montée sur une poulie d'entraînement et une poulie entraînée correspondante; et
- au moins une deuxième courroie d'entraînement (56) montée sur l'autre poulie d'entraînement et l'autre poulie entraînée correspondante.

2. Dispositif de moteur à explosion selon la revendication 1, caractérisé en ce que chaque portion terminale (28, 30) du vilebrequin (16) comporte p poulies d'entraînement (32, 34) (p>1) et en ce que chaque portion d'extrémité de l'axe comprend p poulies entraînées (50).

3. Dispositif de moteur à explosion selon l'une quelconque des revendications 1 et 2, caractérisé en ce que les poulies entraînées (50) ont un diamètre supérieure à celui des poulies d'entraînement.

4. Dispositif de moteur à explosion selon l'une quelconque des revendications 1 à 3, caractérisé en ce que les courroies de transmission (54, 56) sont à section droite trapézoïdale, les poulies ayant une gorge de forme correspondante.
